# EUROPÄISCHE PATENTSCHRIFT

(11) **EP 2 409 623 B1**
(45) Veröffentlichungstag und Bekanntmachung des Hinweises auf die Patenterteilung: **17.04.2013**
(21) Anmeldenummer: 10401114.3
(22) Anmeldetag: 20.07.2010
(51) Int. Cl.: A47L 9/00, B60B 33/00, B60B 19/00

(54) **Bodenstaubsauger mit auf Rollen fahrbarem Gehäuse**
Floor vacuum cleaner with housing on rollers
Aspirateur au sol doté d'un boîtier mobile sur rouleaux

(43) Veröffentlichungstag der Anmeldung: 25.01.2012
(73) Patentinhaber: Miele & Cie. KG, 33332 Gütersloh (DE)
(72) Erfinder: Hunnekuhl, Christian, 49086 Osnabrück (DE); Gerth, Volker, 33739 Bielefeld (DE)

(56) Entgegenhaltungen:
- EP-A2- 0 187 126
- WO-A1-03/001957
- WO-A1-2008/082338
- WO-A2-2008/041956
- DE-A1- 2 824 033
- DE-A1- 3 007 654
- DE-A1-102008 009 617
- DE-A1-102008 011 542
- GB-A- 909 161
- JP-A- 3 251 220

## Beschreibung

Die Erfindung betrifft einen Bodenstaubsauger mit einem Gehäuse, welches auf Rollen fahrbar ausgebildet ist, wobei die Rollen an Rollenachsen drehbar gelagert oder an drehbar gelagerten Rollenachsen gehalten werden, wobei mindestens eine Rollenachse mit ihren Enden und in einer Gleitkufe befestigt ist und gegenüber dem Gehäuse gedämpft gelagert ist.

Ein solcher Staubsauger ist beispielsweise aus der DE 30 07 654 A1 bekannt.

Es ist grundsätzlich bekannt, Rollen von Staubsaugerfahrwerken aus einem Kunststoffkern herzustellen und diesen mit einem Überzug aus elastischen Material zu versehen, siehe beispielsweise DE-OS 28 24 033. Trotz des Überzugs werden die aus Bodenunebenheiten resultierenden Kräfte über die Rollen auf das Gehäuse übertragen und führen zu Geräuschen und materialschädigenden Erschütterungen, insbesondere beim Saugbetrieb auf Hartböden und beim Überfahren von Hindernissen wie Türschwellen, Fliesenfugen oder sogar des eigenen Netzanschlusskabels.

Ein Staubsauger mit Rollen, welche eine dämpfende Eigenschaft aufweisen, ist aus der GB 909 161 A bekannt.

Die DE 10 2008 009 617 A1 offenbart einen Staubsauger, dessen Räder konzentrische Lagen aus Hart- und Weichkomponenten besitzen.

Der Erfindung stellt sich somit das Problem, bei einem Bodenstaubsauger der eingangs genannten Art Fahrgeräusche und fahrbedingte Erschütterungen zu dämpfen.

Erfindungsgemäß wird dieses Problem durch einen Bodenstaubsauger mit den Merkmalen der unabhängigen Patentansprüche 1 oder 2 gelöst. Vorteilhafte Ausgestaltungen und Weiterbildungen der Erfindung ergeben sich aus den nachfolgenden Unteransprüchen.

Die mit der Erfindung erreichbaren Vorteile ergeben sich, wenn mindestens eine Rollenachse mit ihren Enden in einer Gleitkufe befestigt ist und gegenüber dem Gehäuse gedämpft gelagert ist. Insbesondere, wenn die Rollenachse von einer drehbar am Gehäuse gelagerten Gleitkufe aufgenommen wird, sollte einer Gleitkufenachse ein Dämpfungselement zugeordnet sein. Hierdurch werden einerseits die Erschütterungen und Schwingungen auf der Strecke Rad - Gehäuse zusätzlich gedämpft, andererseits werden Erschütterungen, die direkt auf die Gleitkufe wirken, beispielsweise beim Überfahren von hohen Hindernissen, nicht direkt an das Gehäuse weitergegeben. Eine Dämpfung der Rollenachse gegenüber dem Gehäuse kann auch für sich allein, d. h. ohne Rollen mit dämpfenden Eigenschaften sinnvoll sein. Verschiedene Ausgestaltungen sehen vor, dass die am Gehäuse befestigte Gleitkufenachse unter Zwischenlage einer Aufnahmehülse in der Gleitkufe angeordnet ist, wobei das Dämpfungselement zwischen Aufnahmehülse und Gleitkufe angeordnet ist, oder dass die am Gehäuse befestigte Gleitkufenachse unter Zwischenlage des Dämpfungselements in der Gleitkufe angeordnet ist. In beiden Fällen ist es vorteilhaft, wenn die Aufnahmehülse oder die Gleitkufenachse mit axialem Spiel in der Gleitkufe aufgenommen ist. Hierdurch entfaltet das Dämpfungselement eine ideale Wirkung.

Weitere Vorteile ergeben sich dadurch, dass mindestens eine der Rollen eine dämpfende Eigenschaft aufweist. Hierdurch wird einerseits eine wirksame Geräuschdämpfung beim Fahren des Bodenstaubsaugers erzielt, andererseits wird auch die Übertragung von Geräuschen des Staubsaugergebläses auf den Fußboden und eine damit verbundene Resonanzbildung verhindert. Außerdem werden Erschütterungen, die durch Bodenunebenheiten beim Fahrbetrieb entstehen, gedämpft auf das Gehäuse übertragen.

Es ist zweckmäßig, wenn mindestens eine der Rollen einen harten Kern und einen dämpfenden Mantel umfasst. Dabei ist es besonders vorteilhaft, wenn der elastische Mantel als luftgefüllter Pneu ausgebildet ist. Hierdurch wird eine sehr gute Dämpfung der Schwingungen erreicht.

Alternativ kann die Rolle konzentrische Lagen aus abwechselnden Hart- und Weichkomponenten umfassen. Dabei ist es vorteilhaft, wenn zwischen mindestens einer Hartkomponente und mindestens einer Weichkomponente Lufteinschlüsse angeordnet sind. Auch hierdurch wird eine gute Dämpfung von Erschütterungen und Schwingungen erzielt. Es ist dann zweckmäßig, wenn die Lauffläche der Rolle als Weichkomponente ausgebildet ist.

Ein Ausführungsbeispiel der Erfindung ist in den Zeichnungen rein schematisch dargestellt und wird nachfolgend näher beschrieben. Es zeigt
- Figur 1: den hinteren Bereich eines Bodenstaubsaugers,
- Figur 2: einen Schnitt durch eine Gleitkufe mit einer Rolle im Bereich der Rollenachse,
- Figur 3: einen Schnitt durch ein weiteres Ausführungsbeispiel einer Rolle,
- Figur 4: die Rolle gemäß Figur 3 in perspektivischer Darstellung,
- Figur 5: einen Schnitt durch ein erstes Ausführungsbeispiel einer Gleitkufe im Bereich der Gleitkufenachse,
- Figur 6: einen Schnitt durch ein zweites Ausführungsbeispiel einer Gleitkufe im Bereich der Gleitkufenachse.

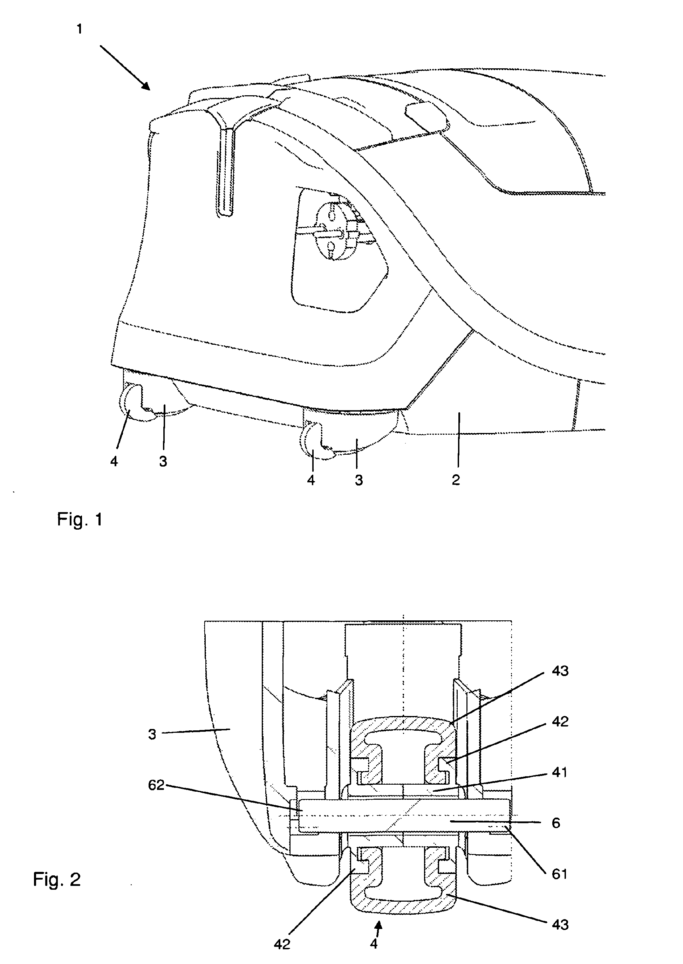

In der Figur 1 ist in einer perspektivischen Darstellung der hintere Bereich eines Bodenstaubsaugers 1 gezeigt. Dort ist erkennbar, dass an einem Gehäuseunterteil 2 im hinteren Bereich zwei Gleitkufen 3 mit Rollen 4 angeordnet sind. Im vorderen Bereich ist eine weitere Gleitkufe, ebenfalls mit einer Rolle ausgestattet, angeordnet, die hier in der Zeichnung aber nicht erkennbar ist.

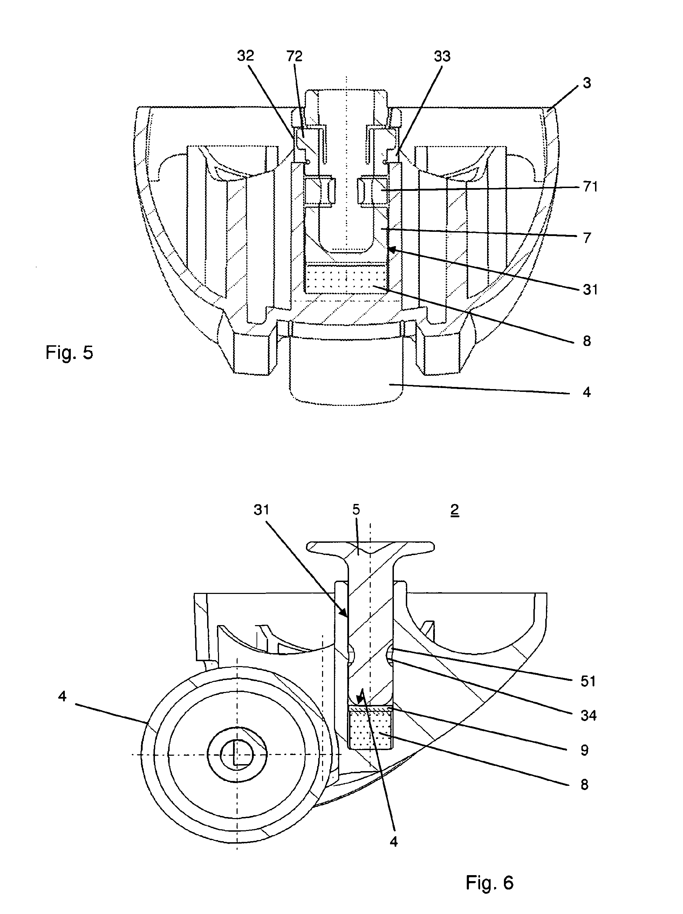

Die Gleitkufen 3 sind an dem Gehäuseunterteil 2 um eine in Gebrauchsstellung des Bodenstaubsaugers horizontale Achse drehbar gelagert. Hierzu sind an dem Gehäuseunterteil 2 drei Gleitkufenachsen 5 befestigt (siehe Figur 6). Die Anordnung der Gleitkufenachsen 5 innerhalb der Gleitkufen 3 ist weiter hinten beschrieben.

Die Rollen 4 sind ebenfalls drehbar gelagert. Hier erfolgt die Lagerung an einer in Gebrauchsstellung waagerechten Rollenachse 6 (siehe Figur 2), welche mit ihren Enden 61 und 62 in der Gleitkufe 3 befestigt ist. Die waagerechte Drehlagerung der Rollenachsen 6 ermöglicht die Fahrbewegung des Bodenstaubsaugers 1, die senkrechte Drehlagerung der Gleitkufenachsen 5 eine Lenkbewegung.

Figur 2 zeigt ein erstes Ausführungsbeispiel einer Rolle 4 in der Gleitkufe 3 anhand eines Schnitts, der die Rolle im Bereich der Rollenachse 6 teilt. Es ist erkennbar, dass die Rolle 6 einen Kern 41 besitzt, der als Hülse aufgebaut ist und die Achse 6 umgibt. Er ist aus einem Hartkunststoff wie PE (Polyethylen) hergestellt und zweiteilig aufgebaut. An den Außenrändern sind Kragen 42 angeformt, die einen dämpfenden Mantel 43 aus einem Elastomermaterial wie EPDM (Ethylen-Propylen-Dien-Kautschuk) aufnehmen. Auf diese Weise entsteht ein luftgefüllter Pneu, der eine dämpfende Eigenschaft aufweist. Die dämpfende Wirkung ist über die Eigenschaften der Elastomermischung einstellbar. Weiterhin ist der Rollendurchmesser gegenüber dem bekannter Gleitkufenrollen vergrößert worden. Hierdurch wird das Überfahren von größeren Hindernissen wie dem Netzanschlusskabel (nicht darestellt) des Bodenstaubsaugers 1 erleichtert, weil der Winkel der Tangente zwischen Rolle 4 und Hindernis gegenüber der Horizontalen verringert wird und demzufolge die notwendige Zugkraft zum Anheben des Bodenstaubsaugers 1 kleiner ist.

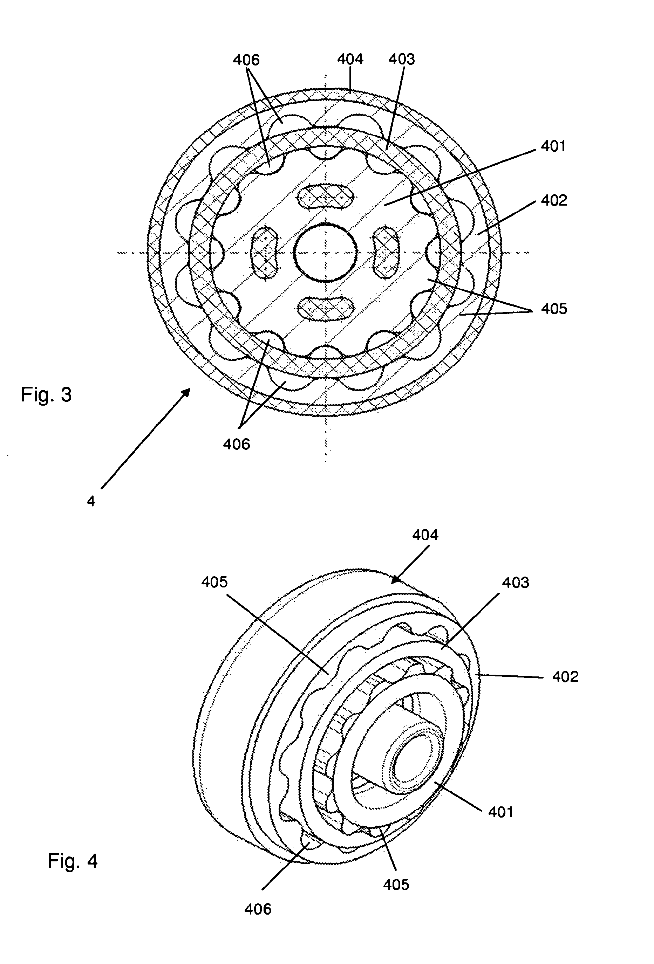

Die Figuren 3 und 4 zeigen ein weiteres Ausführungsbeispiel einer Rolle 4, welche ebenfalls eine dämpfende Eigenschaft besitzt. Diese ist so gestaltet (siehe Figur 4), dass der innere Bereich 401, welcher die Rollenachse 6 aufnimmt, aus einer Hartkomponente wie PE besteht. Ein weiterer Bereich 402, der den inneren Bereich 401 konzentrisch umgibt, ist ebenfalls aus der Hartkomponente hergestellt. Sowohl zwischen den Hartkomponentenbereichen 401 und 402 als auch als Lauffläche der Rolle 4 sind Weichkomponentenringe 403 und 404 eingesetzt. Hier wird vorzugsweise ein spritzgießfähiges thermoplastisches Elastomer mit guten Rolleigenschaften wie TPU (thermoplastisches Polyurethan) verwendet. Vorteil einer solchen Rolle 4 ist, dass sie einstückig in einem Zweikomponenten-Spritzgießverfahren hergestellt werden kann. Die Hartkomponentenbereiche 401 und 402 sind in beiden Teilen jeweils zur Weichkomponente hin gezahnt. Diese Zähne 405 sind dabei versetzt zueinander ausgerichtet, so dass sie ineinander greifen (siehe Schnitt in Figur 3). Der innere Weichkomponentering 403 ist somit zwischen den Zähnen 405 der Hartkomponentebereiche 401 und 402 angeordnet. Der Raum zwischen den Zähnen 405 bleibt offen und enthält Lufteinschlüsse 406, in die sich der Ring 403 ausdehnen kann. Wenn eine Kraft von der Gleitkufe 3 auf die Rollenachse 6 übertragen wird, federt der innere Hartkomponentenbereich 401 gegen den Weichkomponentenring 403. Die Zähne 405 des inneren Hartkomponentenbereichs 401 drücken dabei die Weichkomponente 403 in den freien Bereich 406 zwischen den Zähnen 405 des äußeren Hartkomponentenbereichs 402. Die Verzahnung 405 auf beiden Hartkomponentenbereichen 401 und 402 ist vorteilhaft, da so ein ruhiger Lauf möglich ist. Die Zähne 405 greifen mit der Weichkomponente 403 wie Zahnräder in einander. Der äußere Weichkomponentenring 404 ermöglicht einen ruhigen Lauf auf Hartböden und dämpft zusätzlich.

Zusätzlich zur dämpfenden Rolle selbst ist auch die Gleitkufe 3 und damit die Rollenachse 6 gegenüber dem Gehäuseunterteil 2 gedämpft gelagert. Dadurch werden auch Stöße auf die Gleitkufe 3 nicht ungedämpft an das Gehäuseunterteil 2 weitergegeben. Figur 5 zeigt ein erstes Ausführungsbeispiel einer solchen Dämpfung. Die an dem Gehäuseunterteil 2 befestigte Gleitkufenachse 5 (wie in Figur 6 dargestellt) wird drehbar in einer Aufnahmehülse 7 verrastet. Hierzu greifen zwei federnde Vorsprünge 71 an der Hülse 7 in eine Nut 51 an der Achse 5. Die Aufnahmehülse 7 wird dann in eine Bohrung 31 in der Gleitkufe 3 geschoben, in welche zuvor ein plättchenförmiges Dämpfungselement 8 eingelegt wurde. Das Dämpfungselement 8 besteht aus Polyurethan. Die Aufnahmehülse 7 ist ebenfalls über eine Verrastung (Rastvorsprünge 72 und Nut 32) in der Gleitkufe 3 befestigt, hier ist allerdings ausreichend axiales Spiel 33 vorhanden, so dass die Hülse 7 das Dämpfungselement 8 stauchen kann und die Kraftübertragung zwischen Gleitkufe 3 und Gehäuseunterteil 2 gedämpft erfolgt.

Eine weitere Möglichkeit zur Dämpfung der Gleitkufenachse 5 gegenüber dem Gehäuseunterteil 2 ist in Figur 6 dargestellt. Hier ist die Gleitkufe 3 einteilig aufgebaut und die Gleitkufenachse 5 direkt in der Bohrung 31 verrastet. Dementsprechend sind Rastvorsprünge 34 direkt an der Wand der Bohrung 31 angeordnet und greifen in die Nut 51. Die Nut 51 ist breiter als die Rastvorsprünge 34, so dass sich auch hier ein axiales Spiel ergibt. In die Bohrung 31 ist zuerst ein Dämpfungselement 8 in Form einen Polyurethanscheibe und darauf eine dünne Scheibe 9 aus einem stark verschleißfesten und sebstschmierenden Polymer wie UHMW PE (ultrahochmolekulares Polyethylen) eingelegt. Die Polyurethanscheibe 8 dämpft die spielbedingten Bewegungen der Gleitkufenachse 5, die Polymerscheibe 9 verhindert, dass die Stirnfläche 52 der Achse 5 bei Drehungen am Polyurethan 8 reibt.

## Patentansprüche

1. Bodenstaubsauger (1) mit einem Gehäuse, welches auf Rollen (4) fahrbar ausgebildet ist, wobei die Rollen (4) an Rollenachsen (6) drehbar gelagert oder an drehbar gelagerten Rollenachsen gehalten werden, wobei mindestens eine Rollenachse (6) mit ihren Enden (61) und (62) in einer Gleitkufe (3) befestigt ist und gegenüber dem Gehäuse gedämpft gelagert ist,
**dadurch gekennzeichnet,**
**dass** eine am Gehäuse befestigte Gleitkufenachse (5) unter Zwischenlage einer Aufnahmehülse (7) in der Gleitkufe (3) angeordnet ist, wobei das Dämpfungselement (8) zwischen Aufnahmehülse (7) und Gleitkufe (3) angeordnet ist.

2. Bodenstaubsauger (1) mit einem Gehäuse, welches auf Rollen (4) fahrbar ausgebildet ist, wobei die Rollen (4) an Rollenachsen (6) drehbar gelagert oder an drehbar gelagerten Rollenachsen gehalten werden, wobei mindestens eine Rollenachse (6) mit ihren Enden (61) und 62 in einer Gleitkufe (3) befestigt ist und gegenüber dem Gehäuse gedämpft gelagert ist,
**dadurch gekennzeichnet,**
**dass** eine am Gehäuse befestigte Gleitkufenachse (5) in einer Bohrung (31) der Gleitkufe (3) verrastet ist und dass in die Bohrung (31) ein Dämpfungselement (8) eingelegt ist.

3. Bodenstaubsauger (1) nach einem der Ansprüche 1 oder 2,
**dadurch gekennzeichnet,**
**dass** die Aufnahmehülse (7) oder die Gleitkufenachse (5) mit axialem Spiel in der Gleitkufe (3) aufgenommen ist.

4. Bodenstaubsauger (1) nach einem der Ansprüche 1 bis 3,
**dadurch gekennzeichnet,**
**dass** mindestens eine der Rollen (4) eine dämpfende Eigenschaft aufweist.

5. Bodenstaubsauger (1) nach Anspruch 4,
**dadurch gekennzeichnet,**
**dass** mindestens eine der Rollen (4) einen harten Kern (41, 401) und einen dämpfenden Mantel (43) umfasst.

6. Bodenstaubsauger (1) nach Anspruch 5,
**dadurch gekennzeichnet,**
**dass** der elastische Mantel (43) als luftgefüllter Pneu ausgebildet ist.

7. Bodenstaubsauger (1) nach Anspruch 4,
**dadurch gekennzeichnet,**
**dass** die Rolle (4) konzentrische Lagen (401 bis 404) aus abwechselnden Hart- und Weichkomponenten umfasst.

8. Bodenstaubsauger (1) nach Anspruch 7
**dadurch gekennzeichnet,**
**dass** zwischen mindestens einer Hartkomponente (401, 402) und mindestens einer Weichkomponente (403) Lufteinschlüsse (406) angeordnet sind.

9. Bodenstaubsauger (1) nach Anspruch 7 oder 8,
**dadurch gekennzeichnet,**
**dass** die Lauffläche (404) der Rolle (4) als Weichkomponente ausgebildet ist.

## Claims

1. Floor-type vacuum cleaner (1) comprising a housing which is formed to be movable on wheels (4), the wheels (4) being rotatably mounted on wheel axles (6) or held on rotatably mounted wheel axles, at least one wheel axle (6) being attached via its ends (61) and (62) in a runner (3) and mounted in a damped manner with respect to the housing,
**characterised in that**
a runner axle (5) attached to the housing is arranged in the runner (3) through interposition of a receiving sleeve (7), the damping member (8) being arranged between the receiving sleeve (7) and the runner (3).

2. Floor-type vacuum cleaner (1) comprising a housing which is formed to be movable on wheels (4), the wheels (4) being rotatably mounted on wheel axles (6) or held on rotatably mounted wheel axles, at least one wheel axle (6) being attached via its ends (61) and (62) in a runner (3) and mounted in a damped manner with respect to the housing,
**characterised in that**
a runner axle (5) attached to the housing is locked in a hole (31) in the runner (3), and **in that** a damping member (8) is inserted in the hole (31).

3. Floor-type vacuum cleaner (1) according to either claim 1 or claim 2,
**characterised in that**
the receiving sleeve (7) or the runner axle (5) is received with axial play in the runner (3).

4. Floor-type vacuum cleaner (1) according to any of claims 1 to 3,
**characterised in that**
at least one of the wheels (4) has a damping property.

5. Floor-type vacuum cleaner (1) according to claim 4,
**characterised in that**
at least one of the wheels (4) comprises a rigid core (41, 401) and a damping casing (43).

6. Floor-type vacuum cleaner (1) according to claim 5,
**characterised in that**
the resilient casing (43) is formed as an air-filled rubber tyre.

7. Floor-type vacuum cleaner (1) according to claim 4,
**characterised in that**
the wheel (4) comprises concentric layers (401 to 404) made of alternating rigid and flexible components.

8. Floor-type vacuum cleaner (1) according to claim 7,
**characterised in that**
air pockets (406) are arranged between at least one rigid component (401, 402) and at least one flexible component (403).

9. Floor-type vacuum cleaner (1) according to either claim 7 or claim 8,
**characterised in that**
the running surface (404) of the wheel (4) is formed as a flexible component.

## Revendications

1. Aspirateur traineau (1) avec un carter qui est réalisé de façon à pouvoir se déplacer sur des roulettes (4), les roulettes (4) étant supportées en rotation sur des essieux de roulettes (6) ou étant retenues sur des essieux de roulettes supportés en rotation, au moins un essieu de roulettes (6) étant fixé par ses extrémités (61) et (62) dans un patin de glissement (3) et supporté de façon amortie par rapport au carter,
**caractérisé en ce**
**qu'**un essieu de patin de glissement (5) fixé sur le carter est disposé dans le patin de glissement (3) avec interposition d'une douille de réception (7), l'élément d'amortissement (8) étant disposé entre la douille de réception (7) et le patin de glissement (3).

2. Aspirateur traineau (1) avec un carter qui est réalisé de façon à pouvoir se déplacer sur des roulettes (4), les roulettes (4) étant supportées en rotation sur des essieux de roulettes (6) ou étant retenues sur des essieux de roulettes supportés en rotation, au moins un essieu de roulettes (6) étant fixé par ses extrémités (61) et (62) dans un patin de glissement (3) et supporté de façon amortie par rapport au carter,
**caractérisé en ce**
**qu'**un essieu de patin de glissement (5) fixé sur le carter est encliqueté dans un alésage (31) du patin de glissement (3), et en ce qu'un élément d'amortissement (8) est introduit dans l'alésage (31).

3. Aspirateur traineau (1) selon une des revendications 1 ou 2,
**caractérisé en ce que**
la douille de réception (7) ou l'essieu de patin de glissement (5) est reçu(e) avec un jeu axial dans le patin de glissement (3).

4. Aspirateur traineau (1) selon une des revendications 1 à 3,
**caractérisé en ce**
**qu'**au moins une des roulettes (4) présente une caractéristique amortisseuse.

5. Aspirateur traineau (1) selon la revendication 4,
**caractérisé en ce**
**qu'**au moins une des roulettes (4) comprend un noyau (41, 401) dur et une enveloppe (43) amortisseuse.

6. Aspirateur traineau (1) selon la revendication 5,
**caractérisé en ce que**
l'enveloppe (43) élastique est réalisée comme un pneu rempli d'air.

7. Aspirateur traineau (1) selon la revendication 4,
**caractérisé en ce que**
la roulette (4) comprend des couches (401 à 404) concentriques réalisées en composants durs et tendres alternés.

8. Aspirateur traineau (1) selon la revendication 7,
**caractérisé en ce que**
des poches d'air (406) sont disposées entre au moins un composant dur (401, 402) et au moins un composant tendre (403).

9. Aspirateur traineau (1) selon la revendication 7 ou 8,
**caractérisé en ce que**
la bande de roulement (404) de la roulette (4) est réalisée en tant que composant tendre.
